# EUROPEAN PATENT APPLICATION

(11) **EP 4 230 971 A1**
(43) Date of publication of application: **23.08.2023**
(21) Application number: 22157642.4
(22) Date of filing: 20.02.2022
(51) Int. Cl.: G01F 23/263, G01F 23/80, F17C 1/00, F17C 13/02

(54) **SMART COMPOSITE PRESSURE VESSEL**

(71) Applicant: Hexagon Ragasco AS, 2831 Raufoss (NO)
(72) Inventor: JENSRUD, Vegard, N-2830 Raufoss (NO); ANMARKRUD, Thomas, 2850 LENA (NO); BJØRNERUD, Rune André, 2611 LILLEHAMMER (NO); BRATENG, Marius, 2819 GJØVIK (NO)
(74) Representative: Onsagers AS

(57) **Abstract**

System and method for measuring the level of gas in liquid form in a composite pressure vessel that uses electrical capacitance to perform the measuring wherein the system comprises: a sensor unit suspended from an inlet-outlet unit and arranged to extend into the pressure vessel, wherein the sensor unit comprises a capacitive measuring unit for measuring the level of gas in liquid form in the pressure vessel, at least two sensor electrodes connected to the capacitive measuring unit, a communication unit for communicating the information measured by the capacitive measuring unit, and a power unit for supplying power to at least one of the at least two electrodes, the capacitive measuring unit and the communication unit.

## Description

### FIELD OF THE INVENTION

The present invention regards a system and a method for digitally monitoring a pressure vessel and more particularly a system and a method for digitally monitoring the level of gas in liquid phase in a pressure vessel using an internal sensor unit.

### BACKGROUND AND PRIOR ART

Pressure vessels are widely used over the world to store a wide range of gasses. The gasses are used in fuelling vehicles, in cooking, in oxygen and air pressure vessels used for breathing, pressure vessels used for welding and many other areas. Gasses that is used can be propane, butane, CO₂, O₂, air and many more.

There are several types of pressure cylinders in use, containers made of metals, containers made of composite, and other plastic material, and combinations of these materials. The containers made of composite material can be with or without an inner liner and with or without an outer cover 15.

Keeping track of the condition of the container and the gas level of the container is important in order to ensure that the container is working properly and to keep track of the fill level of the container. On metal containers the level can be measured by controlling the weight of the container of you have to anticipate the level by the use of the container. Further it is also possible to measure the level of a metal container using ultrasonic waves. Using a composite container, the level of the liquid can be seen through the composite material. In addition, there can be placed a pressure gauge that monitors the pressure in the container.

US20190178696A1 described herein are embodiments of a system for monitoring and detecting a level of a tank storing a material. The system may be used in deciding of whether and/or when to provide additional material to the tank, to refill the tank partially or entirely. In some embodiments, the tank may be disposed at a premise such as a residence or commercial building and the system may be disposed in part at that premises to monitor the level of the material in the tank. In some embodiments, the material may be a fuel and the tank may be a fuel tank, to provide fuel to utilities equipment at the premises. In other embodiments, the tank may include other materials, such as other utilities materials. In some embodiments, the utilities material may be potable water.

US20090301190A1 regards a capacitance sensor assembly for detecting relative movement or position between objects, such as amount of gas left in a tank or reservoir, movement of one machine component with respect to another, and so on, includes one or more antenna probes connected to an integrated chip normally associated with touch-screen displays. Each antenna probe operates independently and may be formed as insulated conductive wires or conductive traces between layers of a stiff or flexible substrate, such as a Printed Circuit Board (PCB), with the substrate material serving as the insulating layers. Each antenna probe has a different length representing different measurement positions or locations between the objects being measured to provide dynamic calibration of the measurement under changing environmental conditions.

US 6016697 describes a device for measuring the fill level in a tank, this device uses a capacitive level detection system where the sensor is an elongated capacitive probe that spans the entire height of the tank. A problem with this solution is that the probe is mounted rigidly inside the tank and cannot be removed without destroying the probe. Also, the solution requires an energy source from outside the tank in order to be able to make the measurements. This is a costly solution that is intended for tanks that are permanently installed in a facility.

A problem with the solutions presented above is that the solutions are intended for measuring the level of fuel in a tank like a fuel tank on a vehicle or similar where the fuel is naturally in liquid form at atmospheric pressure. In these solutions the tank is not a pressurized tank and the tank is connected to a vehicle or a place where the supply of energy to the sensor system is not a problem.

The problem with these solutions is that they are adapted to large tanks with multiple access points and connections.

With free standing and possible portable pressure vessels like e.g. LPG pressure vessels or oxygen pressure vessels, leaks must be avoided as a leak could pose a risk of fire or explosion. Another problem is that pressure vessels like these can be standing outside and sometimes in remote areas, which makes changing or recharging power sources hard if you were to add sensors that need a connection to an external power supply like the power grid to function.

### SUMMARY OF THE INVENTION

The present invention is set forth and characterized in the independent claims, while the dependent claims describe other characteristics of the invention.

In one aspect, the invention is related to a system for measuring the level of gas in liquid form in a composite pressure vessel that uses electrical capacitance to perform the measuring wherein the system comprises: a sensor unit suspended from an inlet-outlet unit and arranged to extend into the pressure vessel, wherein the sensor unit comprises a capacitive measuring unit for measuring the level of gas in liquid form in the pressure vessel, at least two sensor electrodes connected to the capacitive measuring unit, a communication unit for communicating the information measured by the capacitive measuring unit, and a power unit for supplying power to at least one of the at least two electrodes, the capacitive measuring unit and the communication unit.

The sensor unit can be suspended from the inlet-outlet unit by an attachment device, the sensor unit can be in the form of an inert/closed unit without any power or signal transfer connection points.

The attachment device has at least one channel allowing gas to pass in and out of the inlet-outlet unit, also the attachment device ensures a distance of at least 0.5 cm between the sensor unit and the inlet-outlet unit, further the attachment device can be attached to the inlet-outlet unit using a clip or an adhesive or a screw. Alternatively, the distance between the sensor unit and the inlet-outlet unit is between 0.5-12 cm, 1-10 cm or 2-8 cm. The attachment device has a cover into which the top part of the sensor unit can be placed wherein the cover can be filled with an adhesive such that the battery or power harvesting unit and a part of the sensor unit can be protected from the gas and that the sensor unit can be attached to the attachment device. The cover and the attachment are made of a plastic, polymer, or any form of similar nonconductive material.

The power unit can be in the form of a battery and/or power harvesting unit.

The sensor unit comprises at least one energy storage element (ESE), such as battery, capacitor or supercapacitor, energy harvesting unit, at least one power management unit (PMU) and a logic sensor unit (LSU). The power management unit keeps the logic sensor unit electrically decoupled from the energy storage until a threshold voltage can be exceeded, upon when the logic sensor unit starts operation.

The sensor system has a standby current consumption of 35-100nA.

An LSU that can be electrically isolated from the ESE until a configurable voltage level can be observed by the PMU that in turn will allow it to operate, or an LSU that can be electrically isolated from the ESE until a configurable time has passed observed by the PMU that in turn will allow it to operate."

The composite material of the composite container can be translucent allowing light to get through and has the qualities allowing radio communication to get through.

The communication unit can be a short-range radio communication unit for communicating information measured by the capacitive measuring unit to a receiver.

The system further comprises a temperature sensor, and a memory unit.

In a second aspect, the invention can be related to a method for digitally monitoring the level of gas in liquid form in a composite pressure vessel, wherein the system comprises a sensor unit which can be suspended from the inlet-outlet unit and extending into the pressure vessel and uses electrical capacitance to measure the amount of gas present in the vessel, wherein the sensor unit comprises: - a capacitive measuring unit for detecting the amount of gas in the pressure vessel, - at least two sensor electrodes connected to the capacitive measuring unit, - a communication unit for communicating the amount of gas left detected by the capacitive measuring unit, and a power unit for supplying power to the capacitive measuring unit, the electrodes and the communication unit; wherein the method comprises the following steps: supplying power from the power unit to the capacitive measuring unit, at least one of the electrodes and the communication unit; measuring the amount of gas present in the composite pressure vessel with the capacitive measuring unit utilizing absolute or relative changes in electrical capacitance, communicating the measured amount of gas present with the communication unit to a memory unit, storing the measured amount of gas present in the composite pressure vessel in the memory and/or a receiver and/or a user, and/or a displaying the information to a user.

the power unit can be a battery and/or an energy harvester that gathers energy from a light source, heat source, radio frequency source.

In a third aspect, the invention can be related to a composite pressure vessel comprising a system for measuring the amount of gas left.

This solution makes it possible to have the sensor unit placed in the composite container for a long period of time without needing any maintenance. This is possible due to the energy harvesting unit and a circuit that allows for minimal use of energy when it is not in use.

### BRIEF DESCRIPTION OF THE DRAWINGS

Fig 1 is a perspective view of a partial cut through of a composite pressure vessel where the sensor unit is connected the inlet/outlet unit of the composite pressure vessel.
Fig. 2a-c is an image of an embodiment of the present invention wherein the sensor unit is embedded in an adhesive layer inside an attachment device.
Fig. 3 is a cut through image of an alternative embodiment of the invention of the attachment method for the sensor unit to an attachment device.
Fig. 4 is a perspective view of the embodiment shown in fig. 3 is attached to the inlet/outlet unit of the composite pressure vessel.
Fig. 5a is a block diagram of the energy harvesting module and the control circuit for the measuring equipment.
Fig. 5b is a diagram illustrating the standby voltage of a prior art system and a system according to the present invention.
Fig. 5c is a diagram illustrating the standby voltage of a system according to the present invention.
Fig. 5d is a diagram showing the enabling of the measuring equipment according to a system that is controlled by a voltage threshold level.
Fig. 5e is a diagram showing the enabling of the measuring equipment according to a system that is controlled by a time based system.
Fig. 6 is a drawing of an embodiment of the present invention illustrating how the invention works.
Fig. 7a-b is an illustration of the system where the flow of the information between the different parts of the systems is indicated.
Fig. 8 is a detailed image of all the steps of the process and information flow.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

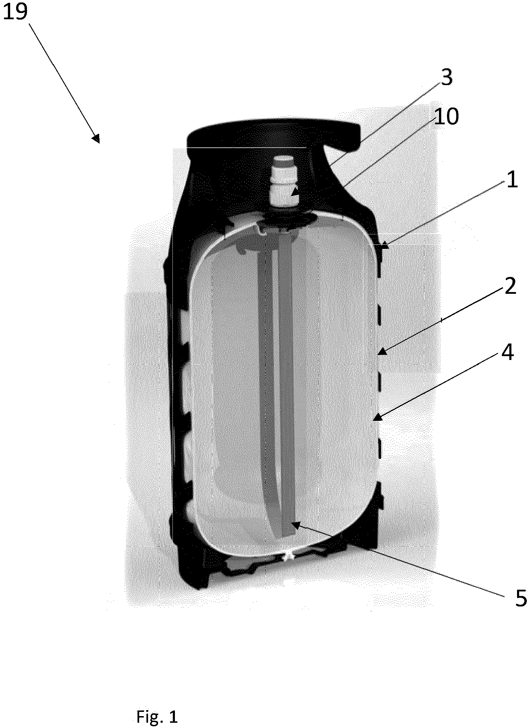

Fig 1 is a perspective view of a partial cut through of a composite pressure vessel where the sensor unit 5 is attached to the inlet/outlet unit 3 of the composite pressure vessel. A composite pressure vessel for storing gas and/or liquified gas may comprise an inner gas tight liner 4, surrounded by a pressure resistant composite layer 2 of fibres and polymer. The liner 4 and the composite layer 2 comprise at least one common opening wherein a boss is arranged. The boss provides for attaching a valve 3 which is the inlet/outlet means for controlling the flow of fluid in and out of the pressure vessel. An outer casing 1 surrounds the composite layer 2 and provides protection against impact. The outer casing 1 may further provide a stand supporting a vertical arrangement of a cylindrical pressure vessel. The casing 1 may include other features such as handles for transport and adapting the bottom surface and the top surface to each other to allow stacking.

The sensor unit 5 is attached to the inlet/outlet unit 3 of the composite pressure vessel. The sensor unit 5 is comprised of sensor electrodes 9 and a capacitive measuring unit 8. The sensor unit 5 has two reference points 6, 11. A first reference point 11 is positioned towards the lower end of the liner 4. This is a reference point for gas in liquid phase. Towards the top end of the liner 4 there is placed a second reference point 6 which is a reference point 6 for gas in gas phase.

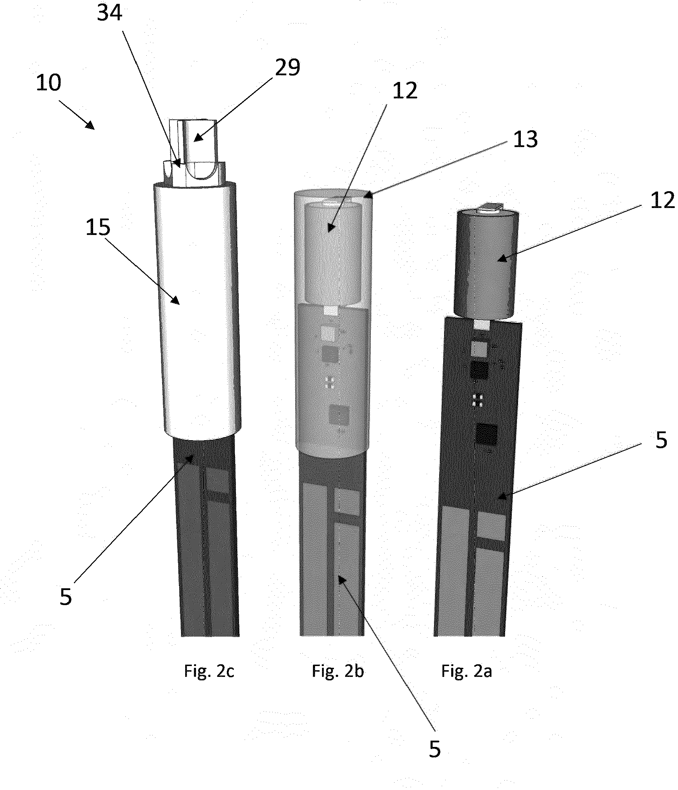

Fig. 2a-c is an image of an embodiment of the present invention wherein the sensor unit is embedded in an adhesive 13 layer inside an attachment device 10. In figure 2a we see a perspective view of an embodiment of the present invention, in this image there is a battery 12 attached to the top of the sensor unit 25. The battery 12 is an energy source that provide the sensor unit power to perform the measurements of the level of gas in liquid phase inside the composite pressure vessel, but also the energy for the communication unit that transmits the measured data to an external unit like a cell phone or an internet gateway.

The battery 12 can be charged by an energy harvesting unit. The energy harvesting unit can be like the chip described in patent applications NO20170555, NO 20181285, NO20181286 and NO20181283. This energy harvesting unit gathers energy from radio waves.

In an alternative solution the energy can be harvested by using solar cells, solar panels or photodiodes attached to the sensor unit 5.

In yet another solution the energy harvesting unit and the solar panels or photodiodes is attached to the outside of the composite pressure vessel. The energy harvested from the outside of the pressure vessel can be transferred to the sensor unit inside the composite pressure vessel by using inductive charging.

The battery 12 is attached to the top of the sensor unit 25 in order to make it possible to protect the battery 12 for the environment inside the composite pressure vessel. Since the gas inside the pressure vessel can be highly explosive there is a need to ensure that there is no chance of a spark being created that can light the gas. Further the battery 12 can start to break down if it is not isolated from the environment inside the composite pressure vessel. In an alternative solution, the battery 12 can also be attached to the bottom of the sensor unit.

In figure 2b we can se that the top part of the sensor unit is encapsulated in an adhesive 13. This adhesive 13 ensures that the battery 12 and the circuits of the sensor unit is isolated from the environment inside the composite pressure vessel. Further the adhesive 13 ensures that the sensor unit is securely attached to the attachment device 10. The adhesive 13 could preferably be an epoxy adhesive 13, but any adhesive 13 or substance with similar characteristics can be used.

In order to ensure that the sensor unit is attached to the attachment device 10 according to this embodiment, the cover 15 of the attachment device 10 is filled with the required amount of adhesive 13 in liquid form. Then the top end of the sensor unit, with the battery 12 on top, is pushed into the adhesive 13 to the required length.

After that the adhesive 13 is allowed to set. When the adhesive 13 has set, the battery 12 and the top part of the sensor unit is protected inside the adhesive 13. This ensures that neither LPG in either liquid or gas phase is allowed to penetrate through the adhesive 13 and reach the battery 12 or the circuitry. This protects the battery 12 from being destroyed by the environment inside the composite pressure vessel and that the battery 12 or the circuitry can ignite the gas inside the composite pressure vessel.

The resulting attachment device 10 with the sensor unit is presented in figure 2c. Here it can be seen that the top of the sensor unit 25 is covered by the attachment device 10. The attachment devise is comprised of a cylindrical hollow section with an opening in one end. The open end is where the adhesive 13 is placed, and the top of the sensor unit 25 is pushed in. At the other end of the attachment device 10 there is a section for attaching the attachment device 10 to the inlet/outlet unit 3.

The attachment device 10 can be connected to the inlet/outlet unit 3 using an adhesive 13 in order to glue the top part of the attachment device 10 to the inside of the inlet/outlet unit 3.

Alternatively, the top part of the attachment device 10 can have a clip function on top. This clip function can be in the form of a lip around the outside of the top part of the attachment device 10. This lip is pushed inside the inlet/outlet unit 3. Inside the inlet/outlet unit 3 there is a lip. The lip on the attachment device 10 is pushed past the lip inside the inlet/outlet unit 3 and the sensor unit is suspended from these two lips. As an alternative to this the attachment device 10 can be fitted over the opening of the inlet/outlet unit 3.

In a further alternative the clip function can be in the form of a ball on the top part of the attachment device 10. This ball is pushed inside the inlet/outlet unit 3. Inside the inlet/outlet unit 3 there is a lip. The ball on the attachment device 10 is pushed past the lip inside the inlet/outlet unit 3 and the sensor unit is suspended from the ball resting on the lip inside the inlet/outlet unit 3. A benefit with this solution is that the sensor unit can swivel back and forth and are capable of measuring the accurate fill level of the composite pressure vessel even if it is not placed on a perfectly level surface.

In yet another alternative the attachment device 10 is screwed into the opening of the inlet/outlet unit 3. The top of the attachment device 10 can be threaded on the outside. These threads correspond to a set of threads inside the opening in the inlet/outlet unit 3. Alternatively, the attachment device 10 can be screwed over the opening in the inlet/outlet unit 3.

Even further the sensor unit can fit into a predefined slot in the inlet-outlet unit. The sensors PCB will have a shape that makes it possible to attach itself in the inlet-outlet unit.

The top of the attachment device10 has at least one channel going from the top most point of the attachment device 10 and down the outside of the top part. In a preferred embodiment there are a number of these channels around the outside of the top of the attachment device 10. These channels allow the gas to flow in and out of the inlet/outlet unit 3 of the composite pressure vessel.

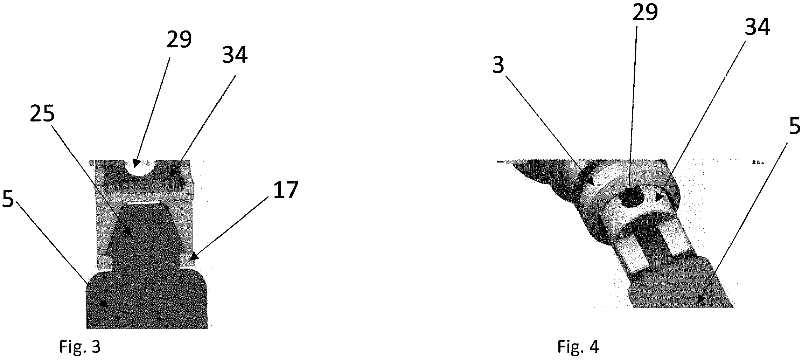

Fig. 3 is a cut through image of an alternative embodiment of the invention of the attachment method for the sensor unit to an attachment device 10. In this alternative solution the sensor unit is not fitted with a battery 12. In this embodiment the sensor unit gets its power from an energy harvesting unit. Fig. 4 is a perspective view of the embodiment shown in fig. 3 is attached to the inlet/outlet unit 3 of the composite pressure vessel.

The energy harvesting unit can be like the chip described in patent applications NO20170555, NO 20181285, NO20181286 and NO20181283. This energy harvesting unit gathers energy from radio waves.

In an alternative solution the energy can be harvested by using solar panels or photodiodes attached to the sensor unit 5.

In yet another solution the energy harvesting unit and the solar panels or photodiodes is attached to the outside of the composite pressure vessel. The energy harvested from the outside of the pressure vessel can be transferred to the sensor unit inside the composite pressure vessel by using inductive charging.

In this embodiment the sensor unit is attached to the attachment device 10 by the use of a clip function. The top section of the sensor unit is for attaching the sensor unit to the attachment device 10. There is a notch in on either side of the top part of the sensor unit, this notch corresponds with a protruding part 17 of the attachment device 10. So, the sensor unit rests on these protruding parts 17 when it is placed in the composite pressure vessel.

The attachment device 10 can be connected to the inlet/outlet unit 3 using an adhesive 13 in order to glue the top part of the attachment device 10 to the inside of the inlet/outlet unit 3.

Alternatively, the top part of the attachment device 10 can have a clip function on top. This clip function can be in the form of a lip around the outside of the top part of the attachment device 10. This lip is pushed inside the inlet/outlet unit 3. Inside the inlet/outlet unit 3 there is a lip. The lip on the attachment device 10 is pushed past the lip inside the inlet/outlet unit 3 and the sensor unit is suspended from these two lips. As an alternative to this the attachment device 10 can be fitted over the opening of the inlet/outlet unit 3.

In a further alternative the clip function can be in the form of a ball on the top part of the attachment device 10. This ball is pushed inside the inlet/outlet unit 3. Inside the inlet/outlet unit 3 there is a lip. The ball on the attachment device 10 is pushed past the lip inside the inlet/outlet unit 3 and the sensor unit is suspended from the ball resting on the lip inside the inlet/outlet unit 3. A benefit with this solution is that the sensor unit can swivel back and forth and are capable of measuring the accurate fill level of the composite pressure vessel even if it is not placed on a perfectly level surface.

In yet another alternative the attachment device 10 is screwed into the opening of the inlet/outlet unit 3. The top of the attachment device 34 10 can be threaded on the outside. These threads correspond to a set of threads inside the opening in the inlet/outlet unit 3. Alternatively, the attachment device 10 can be screwed over the opening in the inlet/outlet unit 3.

The top of the attachment device 10 has at least one channel going from the top most point of the attachment device 10 and down the outside of the top part. In a preferred embodiment there are a number of these channels around the outside of the top of the attachment device 10. These channels allow the gas to flow in and out of the inlet/outlet unit 3 of the composite pressure vessel.

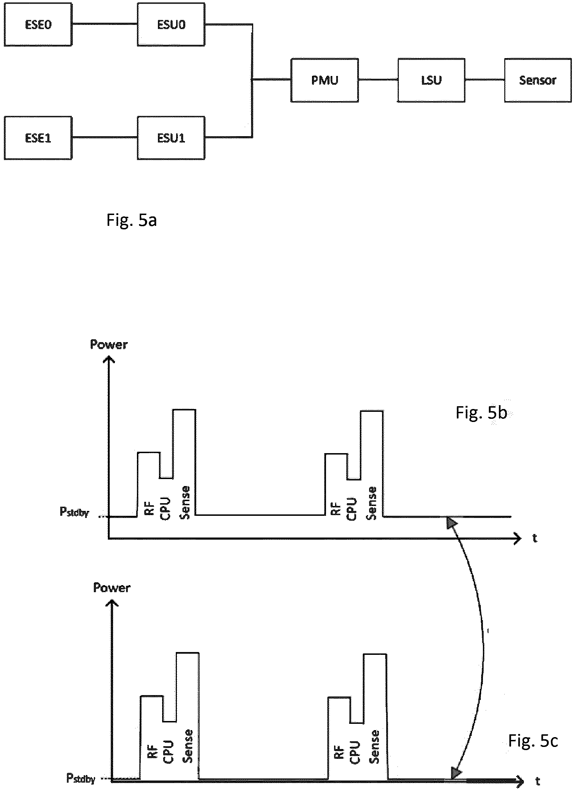

Fig. 5a is a block diagram of the energy harvesting module and the control circuit for the measuring equipment. The measurement circuit of the sensor unit has ultra-low standby current consumption.

Energy Storage Element (ESE):
The ESE can be a conventional battery 12 of various chemistries. Furthermore, it can be a capacitor or supercapacitor.

Energy Storage Unit (ESU):
The ESU is connected to the ESE by any means appropriate for those skilled in the art. The ESU, if present in the system, has the capability to harvest energy from its surroundings and store them onto the ESE. One such example would be a photo voltaic cell collecting solar energy that is in turn stored on the connected ESE. Other energy sources could be RF, thermal, kinetic, and so forth.

Power Management Unit (PMU):
The power management unit comprises analog and digital circuitry to allow the LSU to be powered at the appropriate voltage level or at the correct point in time. Furthermore, it isolates the Logic Sensory Unit (LSU) as an electrical load when it is not set to operate. The PMU is configured to do this in one embodiment where the LSU is isolated until a specific voltage is available on the ESE (Utilizing a voltage monitoring circuit such as a comparator, supervisor etc.) - and in a second embodiment when the LSU is periodically (In Time domain) powered (Utilizing an analog delay, digital timer etc.).

Logic Sensory Unit (LSU):
Logic device with attached memory(ies) that can perform computational tasks. An example of said LSU would be an off the shelf Micro Controller Unit (MCU). The LSU when configured to do so can utilize analog and digital circuitry to convert physical properties such as level, pressure, displacement and so forth into a digital word - that is in turn can be communicated to an observer (Gateway/Cellular device) by an applicable wireless protocol.

### System Sensory Unit (SSU)

A system sensory unit comprises: one or more ESE connected to one or more ESU, connected to one or more PMU that is connected to one LSU.

When the LSU and sensor is off, this circuit uses ultra-low power at 35-100nA in standby. Without this ultra-low power consumption, it would not have been possible to stay in standby and guarantee the continued monitoring of the energy harvesting reservoir based on charge stored on ESE.

Fig. 5b is a diagram illustrating the standby voltage used of a prior art system. a circuit always draws a little power even if it is turned off. Usually this is not a problem due to the fact that power is readily available. However if a circuit is to be placed inside a composite pressure vessel for a long period of time with out being able to draw energy from the outside of the composite pressure vessel there is need for a solution that has the opportunity to use as little power as possible not only when the measurements are performed, but also when the sensor unit is in hibernation. A conventional low power system like this can have a standby sleep mode current of 1.5uA - 2.5uA

Fig. 5c is a diagram illustrating the standby voltage of a system according to the present invention. Here it is possible to see that the sensor unit has ultra-low standby current consumption. The current consumption in standby mode is of 35-100nA. This is possible using a power management unit to decouple the energy storage unit from the logic sensor unit.

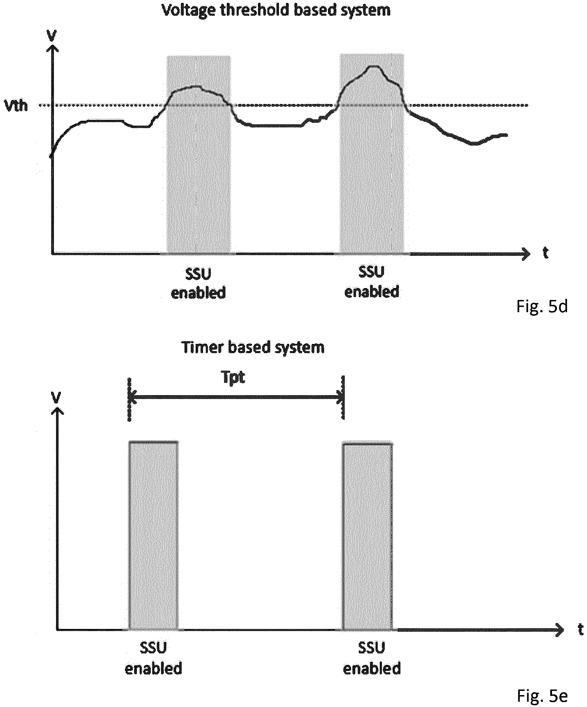

Fig. 5d is a diagram showing the enabling of the measuring equipment according to a system that is controlled by a voltage threshold level. Here it is seen that the Logical Sensor Unit will only operate when the voltage of the energy reservoir exceeds the threshold voltage.

Fig. 5e is a diagram showing the enabling of the measuring equipment according to a system that is controlled by a time based system, here it is possible to see that the measurements are performed at predetermined times. The self-timed system is used when a battery 12 is in place and is used to ensure maximum battery 12 life by doing the same electrical isolation of the sensor unit from the energy storage.

The power management unit decouples the logical sensor unit from the energy storage element until a certain time has passed, upon which the LSU is connected to the energy storage element to perform the measurement. The power management unit can utilize analog delay, digital timer, or similar circuitry to perform the timing

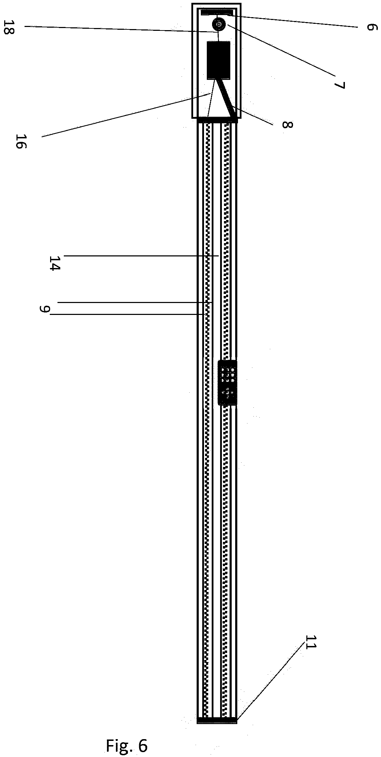

Fig. 6 is a drawing of the sensor unit 5 and the parts it is composed of. In a preferred embodiment of the present invention the sensor unit 5 is in the form of a capacitive measuring unit 8 and sensor electrodes 9. At the first end of the sensor unit 5 there is a reference point 6. This reference point 6 is measuring gas in gas phase. This reference point 6 is placed above the maximum fill level of the pressure vessel. At the opposite end of the sensor unit 5 there is another reference point 11 measuring gas in liquid phase. This reference point 11 measures the gas in liquid phase. If both reference points 6, 11 show the same reading the pressure vessel is either empty and needs refilling or it is overfilled.

The sensor unit 5 has a Bluetooth transmitter, preferably a Bluetooth Low Energy (BLE) transmitter 7. This transmitter can transmit the information gathered by the sensors to a receiver. The receiver can be a mobile phone wherein the measured information can be showed in an app on the phone. Alternatively, the receiver can be an IoT gateway which transmits the information to an internet server where the information can be accessed by a user.

To be able to perform the measurements and to transmit the measurements via BLE, the sensor unit 5 needs a power source. In an embodiment of the present invention the power is supplied by an energy harvesting unit like the chip described in patent applications NO20170555, NO 20181285, NO20181286 and NO20181283. This energy harvesting unit gathers energy from radio waves.

In an alternative solution the energy can be harvested by using solar cells or photodiodes attached to the pressure vessel. Both solutions have the benefit that they are maintenance free since they do not need to be recharged in the same way as a battery 12 need.

However, a battery 12 can also be used as a power source and in addition to the other solutions.

The sensor unit 5 can also be fitted with a memory unit 16. This allows the capacitive measuring unit 8 to store the measurements if the pressure vessel is not in contact with a Bluetooth receiver.

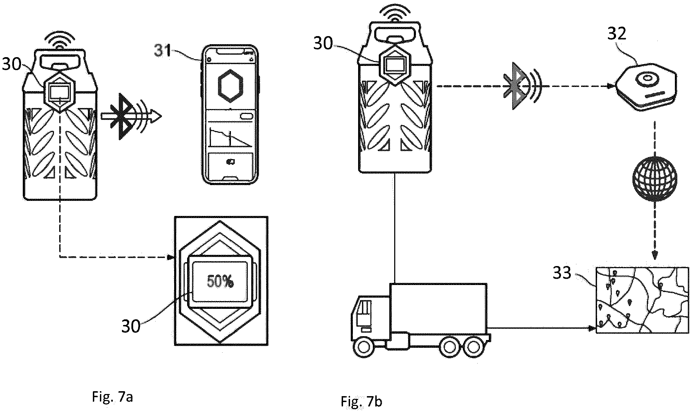

Fig. 7a is an illustration of the flow of the information between the different parties of the systems is indicated. The sensor unit 5 attached to the composite pressure vessel sends the measured information to a mobile communication device 31 when it is within range of the communication unit 7 of the system. The measured information can be displayed in an app on the mobile communication device 31. If the displayed information reveals that the composite pressure vessel is empty, or close to empty the user can change the composite pressure vessel to a new filled composite pressure vessel. As an alternative solution the measured information can be displayed on a digital display 33 situated on the pressure vessel. The digital display 33 can be in addition to the app om the mobile communication device 31. Alternatively, the digital display 33 can be instead of the app on the mobile communication device.

Fig. 7b is an illustration of the flow of the information between the different parties of the systems is indicated. The communication device of the composite pressure vessel sends the measured information to an internet gateway 32. The internet gateway 32 sends the information to e.g. a site on the internet. The information can be accessed by a third party. The third party can be a supplier of composite pressure vessels. When the measured gas level of the composite pressure vessel shows that it is below a set threshold level the supplier can change the pressure vessel to a full one. The supplier can keep track of multiple pressure vessel placed in multiple places.

In order to keep track of the individual pressure vessels each vessel can be fitted with a unique ID. This makes it possible to store historical data related to each individual composite pressure vessel. The location of all the pressure vessel that the supplier is responsible for can be displayed in a map in order to make it easier for the supplier to find out where an empty pressure vessel is located. Alternatively, it can be stored as information in a data sheet.

When an empty pressure vessel is collected the supplier can fill the vessel and relocate it to another location. The supplier can put in the new location of the pressure vessel into datasheet or mark it on the map. Alternatively, each composite pressure vessel can be fitted with a satellite navigation unit that allows the supplier to keep track of the pressure vessel in real time. This makes it possible to keep track of the pressure vessel even if it has been moved.

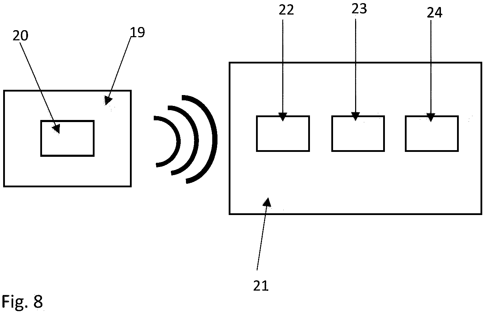

Fig. 8 is a detailed image of the embodiment presented in figure 4 wherein all the steps of the process and information flow is indicated. It is displayed that the composite pressure vessel (LPG Cylinder) 19 has an asset management platform 20. This platform 20 collects information about the individual pressure vessels 19. The collected data is sent to a Multicloud Management Platform (MCMP) 21. The MCMP 21 is comprised of a billing, rating, and payment module 22 that keeps track of the billing, rating and payment related to each individual pressure vessel 19. Further the MCMP 21 can have a data management module 23. The data management module 23 stores and analyses the information sent from each pressure vessel 19. It can further keep track of the technical information related to each pressure vessel 19. Further the MCMP 21 can have one or more communication interfaces 24. The communication interfaces 24 can be a web interface, it can be a telecommunication interface (GSM networks) and additional networks like satellite navigation interface like GPS interface (Tracking device).

In addition to only measuring the gas level of the pressure vessel it is possible to keep track of the number of times the pressure vessel has been refilled.

A main idea of the present invention is to provide a system wherein the sensor unit 5 is in the form of an inert/closed unit without any power or signal transfer connection points. This means that the sensor unit is not provided with anything from the outside after it is placed in the composite pressure vessel. The circuit harvests energy, controls when to measure and communicates the results completely without any aid from the outside. It is a stand-alone system that do not need any maintenance or addition from the outside.

### LIST OF REFERENCE NUMBERS

1: Casing
2: Composite layer
3: Inlet/outlet unit
4: Inner liner
5: Sensor unit
6: Point of reference «always gas phase»
7: Bluetooth transmitter/communication unit
8: Capacitive measuring unit
9: Sensor electrodes
10: Attachment device
11: Point of reference «always liquid phase»
12: Battery
13: Adhesive
14: Capacitance measuring line
15: Cover
16: Memory unit
17: Protruding part
18: Temperature sensor
19: Composite pressure vessel (LPG Cylinder)
20: Asset management platform
21: Multicloud Management Platform (MCMP)
22: Billing, rating, and payment module
23: Data management module
24: Communication interface
25: The top part of the sensor unit
29: Channel
30: Display
31: Mobile Phone
32: IoT Gateway
33: Display Logistics route
34: Top part of the attachment device

## Claims

1. System for measuring the level of gas in liquid form in a composite pressure vessel that uses electrical capacitance to perform the measuring **characterised in that** the system comprises:
a sensor unit (5) suspended from an inlet/outlet unit (3) and arranged to extend into the pressure vessel (19),
wherein the sensor unit (5) comprises
• a capacitive measuring unit (8) for measuring the level of gas in liquid form in the pressure vessel,
• at least two sensor electrodes (9) connected to the capacitive measuring unit (8),
• a communication unit (7) for communicating the information measured by the capacitive measuring unit (8), and
• a power unit for supplying power to at least one of the at least two electrodes, the capacitive measuring unit (8) and the communication unit (7).

2. System according to claim 1 wherein the sensor unit (5) is suspended from the inlet-outlet unit (3) by an attachment device (10).

3. System according to claim 1 or 2 wherein the sensor unit (5) is in the form of an inert/closed unit without any power or signal transfer connection points.

4. System according to any of the claims 1-3 wherein the attachment device (10) has at least one channel (29) allowing gas to pass in and out of the inlet-outlet unit (3).

5. System according to any one of the claims 2-4 wherein the attachment device (10) ensures a distance of at least 0.5 cm between the sensor unit (5) and the inlet-outlet unit (3).

6. System according to any one of the claims 2-5 wherein the attachment device (10) is attached to the inlet-outlet unit (3) using a clip or an adhesive (13) or a screw.

7. System according to any one of the claims 1-6 wherein the power unit (17) can be in the form of a battery (12) and/or power harvesting unit.

8. System according to any one of the claims 1-7, wherein the attachment device (10) has a cover (15) into which the top part of the sensor unit (5) is placed.

9. System according to claim 8, wherein the cover (15) is filled with an adhesive (13) such that the battery (12) or power harvesting unit and a part of the sensor unit (5) is protected from the gas and that the sensor unit is attached to the attachment device (10).

10. System according to any one of the claims 2-9, wherein the cover (15) and or the attachment device (10) is made of a plastic, polymer, or any form of similar nonconductive material.

11. System according to claims 1 wherein the sensor unit (5) comprises at least one energy storage element (ESE), such as battery (12), capacitor or supercapacitor, energy harvesting unit, a power management unit (PMU) and a logic sensor unit (LSU).

12. System according to claim 11, wherein the power management unit keeps the logic sensor unit electrically decoupled from the energy storage until a threshold voltage is exceeded, upon when the logic sensor unit starts operation.

13. System according to claim 11 or 12 wherein the sensor system has a standby current consumption of 35-100nA.

14. System according to any one of the claims 11-13, wherein an LSU that is electrically isolated from the ESE until a configurable voltage level is observed by the PMU that in turn will allow it to operate.

15. System according to any one of the preceding claims wherein the communication unit (7) is a short-range radio communication unit (7) for communicating information measured by the capacitive measuring unit (8) to a receiver (31, 32, 33, 34).

16. System according to any one of the claims 1-15 wherein the system further comprises a temperature sensor (18), and a memory unit (16).

17. Method for digitally monitoring the level of gas in liquid form in a composite pressure vessel, wherein the system comprises a sensor unit (5) which is suspended from the inlet-outlet unit (5) and extending into the pressure vessel and uses electrical capacitance to measure the amount of gas present in the vessel, wherein the sensor unit (5) comprises: - a capacitive measuring unit (8) for detecting the amount of gas in the pressure vessel, - at least two sensor electrodes (9) connected to the capacitive measuring unit (8), - a communication unit (7) for communicating the amount of gas left detected by the capacitive measuring unit (8), and a power unit for supplying power to the capacitive measuring unit (8), the electrodes (9) and the communication unit (7);
wherein the method comprises the following steps:
a. supplying power from the power unit to the capacitive measuring unit (8), at least one of the electrodes (9) and the communication unit (7);
b. measuring the amount of gas present in the composite pressure vessel with the capacitive measuring unit (8) utilizing absolute or relative changes in electrical capacitance,
c. communicating the measured amount of gas present with the communication unit (7) to
i. a memory unit (16), storing the measured amount of gas present in the composite pressure vessel in the memory and/or
ii. a receiver (31,32, 33) and/or
iii. a user (31, 33), and/or
iv. displaying the information to a user (31,33).

18. Method according to claim 17 wherein the power unit is a battery (12) and/or an energy harvester that gathers energy from a light source, heat source, radio frequency source.

19. A composite pressure vessel comprising a system for measuring the amount of gas left according to any one of the claims 1-16.

20. Composite pressure vessel according to claim 19, wherein the composite material of the composite container is translucent allowing light to get through and has the qualities allowing radio communication to get through.
